# EUROPEAN PATENT APPLICATION

(11) **EP 4 656 514 A1**
(43) Date of publication of application: **03.12.2025**
(21) Application number: 24382583.3
(22) Date of filing: 31.05.2024
(51) Int. Cl.: B64C 9/06, B64C 9/20, B64C 3/48, B64C 9/12, B64C 9/30, B64C 9/02, B64C 3/54

(54) **AIRCRAFT LIFTING SURFACE**

(71) Applicant: Airbus Operations, S.L.U., 28906 Getafe (Madrid) (ES)
(72) Inventor: GONZÁLEZ ANTOHI, Miguel, E-28906 Madrid (ES); GUINALDO FERNÁNDEZ, Enrique, E-28906 Madrid (ES); JARA RODELGO, Álvaro, E- Madrid (ES)
(74) Representative: ABG Intellectual Property Law, S.L.

(57) **Abstract**

The present invention belongs to the field of aircraft movable parts, namely to the configuration of aerodynamic surfaces. More in particular, it relates to the architecture of an aerodynamic surface (1) comprising two control surfaces (3, 4) towards its trailing edge adapted to modify the lift and drag characteristics of said aerodynamic surface. The invention relates to a hybrid control surface comprising a forward control surface (3) and a rearward control surface (4) and the movement actuation of these control surfaces to enable lifting surface curvature.

## Description

### TECHNICAL FIELD OF THE INVENTION

The present invention belongs to the field of aircraft movable parts, namely to the configuration of aerodynamic surfaces. More in particular, it relates to the architecture of an aerodynamic surface comprising two control surfaces towards its trailing edge adapted to modify the lift and drag characteristics of said aerodynamic surface. The invention relates to a hybrid control surface comprising a forward control surface and a rearward control surface and the movement actuation of these control surfaces to enable lifting surface curvature.

### BACKGROUND OF THE INVENTION

Aircrafts conventionally comprise aerodynamic surfaces or lifting surfaces (understood as equivalent terms herein) for generating lifting forces, which are typically divided into a leading edge (facing the incoming airflow), a torsion box (providing rigidity to bending and torsion moments), and a trailing edge situated in this order chordwise, each section being subsequently connected to the next section.

Optionally, aerodynamic surfaces may also comprise one or more control surfaces at the leading or trailing edge with the aim of for example, delaying the stall point, allowing inflight manoeuvres, controlling flow separation, increasing the lifting timely, etc. Surrounding all these components, the aerodynamic surfaces comprise upper and lower surfaces forming an enclosure which is typically continuous except in the mechanical connections between the torsion box and the control surfaces to allow their deflection.

In aeronautics, the most commonly known aerodynamic surfaces are wings, but empennage structures such as the Vertical Tail Plane ("VTP") or the Horizontal Tail Plane ("HTP") are also regarded as aerodynamic surfaces. Unlike wings or HTP that are geometrically designed to generate lift, and generally comprise non-symmetrical aerofoils, a VTP comprises a symmetrical geometry whose camber is the same at both sides of the centerline. This is because the VTP may generate pulling or pushing forces at both sides, enabling yaw rotation of the aircraft.

Regarding existing control surfaces in aircrafts, they are typically made of rigid bodies which are mechanically deflected thanks to dedicated actuators producing their controlled movement around a fixed hinge axis which is located downwards the rear spar of the torsion box. More in particular, said hinge axis has an offset with respect to the actuator displacement so that the movable structure can turn around the hinge axis when the actuator expands or retracts. The actuator produces expansion or retraction displacement approximately in the direction parallel to the chord of the lifting surface. Actuators implemented nowadays are either hydraulic, electric or hybrid and are responsible for deflection of the control surface. These control surfaces are commonly known as "elevators" in the case of the horizontal tail planes and "rudders" in the case of the vertical tail planes.

There exist double hinged rudders that are used by aircrafts where maximum yaw power for a given surface is a design priority. In this configuration, there is a first actuation system for the first hinge and a second actuation system for the second hinge. However, these designs have a significant drawback as the mechanism of the second hinge is usually covered by little blisters which create a drag impact in all the stages of the mission.

It is further known that there exist lifting surfaces with morphing trailing edges with the aim to reduce the actuation loads for a same control surface aerodynamic performance while minimizing drag as there are no steps between the control surface and the torsion box of the lifting surface. However, the morphing trailing edges are very complex to implement for the size of a commercial passenger aircraft lifting surface as the deflections and deformations required are significant and the systems shall be operational during the whole life of the aircraft.

Therefore, the present invention has the aim to provide a new control surface configuration for improving aerodynamic surface efficiency when the control surfaces are deflected, potentially enabling a size reduction of such aerodynamic surfaces.

### SUMMARY OF THE INVENTION

The present invention provides an aircraft lifting surface according to claim 1 and an aircraft according to claim 15. Advantageous embodiments are defined in the dependent claims.

In a first inventive aspect, the invention provides an aircraft lifting surface comprising:
- a support structure,
- a forward control surface arranged downstream of the support structure (2), and
- a rearward control surface being arranged downstream of the forward control surface;
wherein
the forward control surface is rotatably attached to the support structure at along a pivot axis,
the rearward control surface is rigidly connected to the forward control surface,
the rearward control surface comprises an aerodynamic surface defined by a deformable skin comprising an upper deformable skin and a lower deformable skin, and
the aircraft lifting surface further comprising:
   - first driving means configured to rotate the forward control surface together with the rearward control surface around the pivot axis forming a deflection angle with respect to the support structure; and
   - second driving means connected to the deformable skin of the rearward control surface and being configured to deform the deformable skin of the rearward control surface.

In relation with the geometry of aircraft lifting surfaces, the wing, the horizontal stabilizer ("HTP", Horizontal Tail Plane) and the vertical stabilizer ("VTP", Vertical Tail Plane) of an aircraft are all based on aerofoil sections. The term "aerofoil" will be understood as the cross-sectional shape of an aerodynamic or lifting surface, said shape being determined so as to generate an aerodynamic force in the event of relative movement through a fluid, the component of said force perpendicular to the direction of motion being called lift.

In relation with the lifting surfaces of a wing or a HTP, said aerodynamic surfaces have an upper surface, so-called "extrados" or "suction face", and a lower surface, so-called "intrados" or "pressure face". These surfaces aim at keeping the aero-shape of the aerofoil. Furthermore, by "upper surface" it can be defined only a part of the entire upper surface, such as the one corresponding to the control surfaces, and similarly the term "lower surface" can define only a part of the entire lower surface.

Further in relation with the geometry of aerodynamic surfaces, the term "span" refers to the distance from the tip of the aerodynamic surface (e.g. the wingtip) to the root and, then, "spanwise" refers to "along/in the direction of the span".

Similarly, the term "chordwise" refers to a direction from the leading edge to the trailing edge, or vice versa, that is, "along/in the direction of the chord".

The term "leading edge" refers to the foremost edge of the lifting surface and thus, of the aerofoil, as the aircraft moves forward.

The term "trailing edge" refers to the opposite edge respectively to the "leading edge" of the lifting surface. Said trailing edge is located aft of the torsion box of the lifting surface, as the aircraft moves forward. "Aft" is referring to the back part of the lifting surface, sharing the same meaning as "rear" and contrasting with "forward", wherein a forward portion is closer to a cockpit of the aircraft than an aft or rear portion.

According to the present invention, the lifting surfaces comprises two control surfaces, a forward control surface and a rearward control surface. These control surfaces are connected between them and arranged downstream the support structure. Specifically, the forward control surface is located between the support structure and the rearward control surface.

The forward control surface is attached to the support structure and is also configured to rotate around a pivot axis located within the lifting surface. This pivot axis is arranged substantially along a spanwise direction of the lifting surface and provides a hinge. Thus, the forward control surface is able to rotate relative to the support structure around such pivot axis. In an embodiment, the pivot axis is a rotating shaft.

The rearward control surface is further connected to the forward control surface and in this case this connection is a rigid connection. This rigid connection is understood as a connection which does not provide any mechanical articulation between control surfaces. In an embodiment, this rigid connection is provided through a spar (or first spar as described below). This spar is a structural element located inside the lifting surface and supporting the connection between the two control surfaces.

There is a first driving means (also called driving mechanism) configured to operate the rotation of the forward control surface together with the rearward control surface around the pivot axis. That is, the rotation of the forward control surfaces causes the rotation of the rearward control surface at the same time. This rotation along the pivot axis causes both forward and rearward control surfaces to form a deflection angle with respect to the support structure, this means with respect to the chordwise direction of the lifting surface.

The aerodynamic surface of the rearward control surface is configured with a deformable skin that comprises an upper deformable skin and a lower deformable skin. Specifically, the upper deformable skin corresponds to the extrados of the rearward control surface whilst the lower deformable skin corresponds to the intrados of the rearward control surface.

The external shape of the rearward control surface is defined by a deformable skin or morphing skin, which provides the aerodynamic surface with the capacity to adapt its morphology to flight controls. In some embodiments, the deformable skin is a flexible skin made of deformable materials.

In this context, the terms "deformable" or "flexible material" will be understood as a compliant material which has the property to be deformed, for example elastically deformed when a force is applied and to return to its original shape when said force ceases or is reverted, all while maintaining sufficient stiffness to ensure structural stability in the various phases of flight.

The deformable skins used in aerodynamic surfaces do not have an abrupt step in the aerodynamic shape but have a smooth or seamless one, with local and intentional deformations of the full structure, thus improving overall aerodynamic efficiency and controllability without affecting the aircraft own structural integrity.

The second driving means are configured to change rearward control surface configuration and thereby to change aerodynamic characteristics of the rearward control surface. Any of the solutions known from the morphing technology, can be applied for the present invention. Nevertheless, preferable embodiments of this second driving means are described below.

A double curvature mechanism is proposed for the present lifting surface. A first curvature effect is provided by the forward control surface hinge at the pivot axis, and a second curvature effect is provided by a morphing technology at the rearward control surface. These first and second curvature are achieved by actuating the first driving means and the second driving means respectively.

The aerodynamic surface of the invention advantageously provides a double curvature so that the aerodynamic surface only has one gap zone instead of two. This means that the curvature of the aerodynamic surface can be increased and therefore the efficiency of the aerodynamic surface is increased due to the deformable control surface configured as a morphing surface through which it is not necessary to deflect the aerodynamic surface as much as if there were two hinges or hinged surfaces.

Therefore, the present invention provides a hybrid lifting surface configured with a hinged control surface and a deformable control surface. This new solution improves aerodynamics surface efficiency when the control surfaces are deflected relative to the support structure, potentially enabling an overall stabilizer size reduction. These effects may cascade into drag, weight and cost reductions.

The present lifting surface advantageously delivers maximum yaw power for a given aerodynamic surface area (VTP area) and provides potentially smaller VTP size with significant benefits in terms of weight, drag and cost. In addition, in the case of the HTP, the elevator's efficiency is increased with a hybrid configuration of the invention and as well as the drag impact is minimised compared to the prior art solutions.

In an embodiment, the actuation of the second driving means is independent from the rotation around the pivot axis of the forward control surface. That is, the second driving means is actuated independently from the actuation of the first driving means.

In an embodiment, the second driving means comprises a rod and guiding means for guiding the rod, the rod being attached to the rearward control surface so as to be configured to deform the upper deformable skin or the lower deformable skin, and wherein the second driving means further comprises an actuator connected to the rod and configured to make the rod move according to a linear movement guided by the guiding means.

In an embodiment, the rod passes through the guiding means and is attached to the upper deformable skin or lower deformable skin of the rearward control surface.

The actuator pulls or pushes the rod through the guiding means deforming the deformable skin of the rearward control surface at the trailing edge.

In another embodiment, the second driving means is mechanically linked with the support structure, so that the rotational movement of the forward control surface together with the rearward control surface around the pivot axis causes the actuation of the second driving means.

The operation of the first driving means causes the operation of the second driving means. Advantageously, only one actuator is needed for controlling the movement of the control surfaces due to the mechanical link that is provided between the forward control surface and the rearward control surface. With only one actuator, the weight and complexity of the lifting surface is reduced.

In an embodiment:
the second driving means comprises a rod and guiding means for the rod, the rod passing through the guiding means and being attached to the upper deformable skin or the lower deformable skin, and
the mechanical link between the second driving means and the support structure comprises a bar fixedly attached to the support structure and connected to the rod through a kinematic joint adapted to allow the rotation of the bar relative to the rod,
so that the rotational movement of the forward control surface together with the rearward control surface around the pivot axis causes the bar to rotate at the kinematic joint and a linear movement of the rod through the guiding means.

The mechanical link converts the rotary motion around the pivot axis into a linear motion of the rod of the second driving means. As the forward control surface rotates with respect to the support structure, the bar of the mechanical link further rotates and causes the rod to be pulled or pushed through the guiding means deforming the deformable skin of the rearward control surface at the trailing edge. The connection between the bar and the rod is a kinematic joint, wherein the joint allows the rotation of the bar relative to the rod.

In an embodiment, the rod passes through the guiding means and is attached to the upper deformable skin or lower deformable skin of the rearward control surface.

In an embodiment, the bar of the mechanical link is fixed at one end to the support structure and connected at the other end to the rod. In an embodiment, the bar of the mechanical link is fixed to the support structure allowing the bar to pivot relative to the support structure.

In an embodiment, the guiding means comprises a first spar arranged connecting the forward control surface with the rearward control surface and an additional spar arranged on the rearward control surface between the upper deformable skin and the lower deformable skin, and wherein the rod passes through the first spar and the additional spar.

The rod is restrained to a linear motion thanks to the guiding means, specifically by means of the two spars.

In an embodiment, the guiding means comprises an enclosing structure passing through the first spar and defining a straight channel through which the rod is adapted to move or translate linearly. In this case, the rod is restrained to a linear motion due to the enclosing structure.

In an embodiment, the guiding means is provided such that the linear movement of the rod is perpendicular to a tip end at the trailing edge of the rearward control surface. This embodiment advantageously avoids deformation induced twisting on the rearward control surface.

In an embodiment, the rod is attached to the upper deformable skin and/or the lower deformable skin through a first fitting.

In an embodiment, the aircraft lifting surface comprises a plurality of second driving means distributed along the rearward control surface. Specifically, the plurality of second driving means is distributed along the span of the rearward control surface. This configuration is due to the fact that the rearward control surface has a spanwise extension which requires several second driving means. Alternatively, this configuration is due to the fact that each rearward control surface is formed by several sub-surfaces and each of these is actuated by a respective second driving means.

In an embodiment, the aircraft lifting surface comprises an upper skin that is continuous between the forward control surface and the rearward control surface. That is, there is superficial continuity between the two control surfaces on the extrados of the aircraft lifting surface.

In an embodiment, the lower deformable skin of the rearward control surface is configured to slide against a lower skin of the forward control surface or to slide within the aircraft lifting surface. Particularly, the lower deformable skin of the rearward control surface slides along the chord of the aircraft lifting surface.

In an embodiment, the lower deformable skin of the rearward control surface is configured to slide along the lower skin within the aircraft lifting surface, specifically within the rearward control surface.

The sliding motion of the lower deformable skin is a result of the second driving means actuation to deform the rearward control surface at the trailing edge.

In an embodiment, the aircraft lifting surface is:
- an aircraft wing, or
- a horizontal stabilizer, or
- a vertical stabilizer.

In an embodiment, the combination of the forward control surface and the rearward control surface is a rudder, or an elevator, or a wing aileron or a wing flap.

In an embodiment,
the first driving means is configured to rotate the forward control surface together with the rearward control surface around the pivot axis according to a first direction;
the second driving means is configured to deform the deformable skin of the rearward control surface according to a second direction; and
the first direction and the second direction are the same or different.

The present lifting surface allows the forward control surface to be rotated together with the rearward control surface in a first direction. In addition, the deformable skin of the rearward control surface can be deformed in a second direction. These first and second directions are understood as downwards or upwards relative to the chord of the lifting surface or relative to the support structure.

Advantageously, the tip end of the rearward control surface (at the deformable skin) can move or be deformed in any direction regardless of the deflection angle of the forward control surface.

In an embodiment, the forward control surface together with the rearward control surface rotates in the same direction in which the deformable skin is deformed. In another embodiment, the forward control surface together with the rearward control surface rotates in an opposite direction in which the deformable skin is deformed.

In a second inventive aspect, the invention provides an aircraft comprising an aircraft lifting surface according to the first inventive aspect.

### DESCRIPTION OF THE DRAWINGS

These and other characteristics and advantages of the invention will become clearly understood in view of the detailed description of the invention which becomes apparent from preferred embodiments of the invention, given just as examples and not being limited thereto, with reference to the drawings.
- Figure 1: This figure shows a schematic representation of an aeronautic lifting surface according to an embodiment of the invention.
- Figure 2: This figure shows a schematic representation of an aeronautic lifting surface according to an embodiment of the invention.
- Figure 3: This figure shows a schematic cross section of a portion of an aircraft lifting surface according to an embodiment of the invention.
- Figures 4: This figure shows a schematic representation of an aircraft lifting surface with the forward control surface actuated according to an embodiment of the present invention.
- Figures 5: This figure shows a schematic representation of an aircraft lifting surface with the rearward control surface actuated according to an embodiment of the present invention.
- Figures 6: This figure shows a schematic representation of an aircraft lifting surface with the forward control surface and the rearward control surface actuated according to an embodiment of the present invention.
- Figure 7: This figure shows a schematic representation of an aircraft comprising a lifting surface according to an embodiment of the invention.

### DETAILED DESCRIPTION OF THE INVENTION

Once the object of the invention has been outlined, specific non-limitative embodiments are described hereinafter.

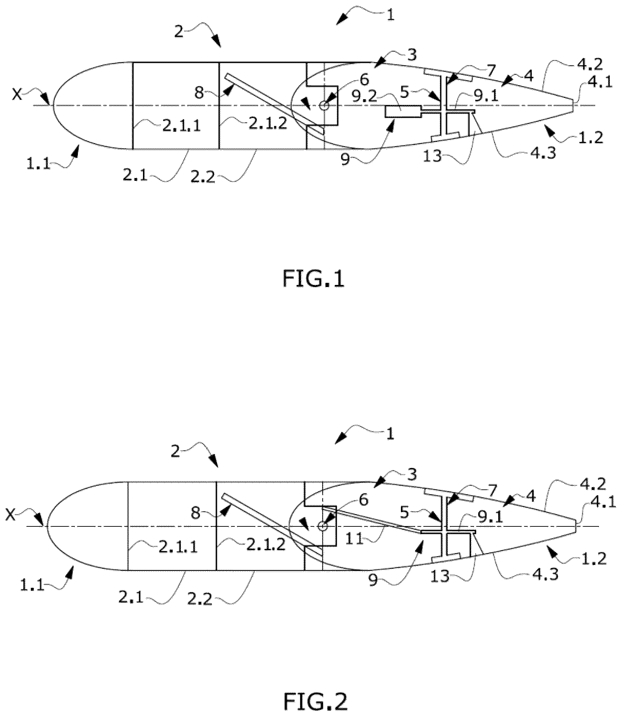

Figures 1 and 2 each show a schematic representation of an aircraft lifting surface (1) according to an embodiment of the present invention. In an embodiment, the lifting surface (1) is an aircraft wing, a horizontal stabilizer or a vertical stabilizer.

These lifting surfaces (1) comprise a leading edge (1.1) followed by support structure (2) comprising a torsion box (2.1) and a trailing edge (2.2), the torsion box (2.1) being placed between the leading edge (1.1) and the trailing edge (2.2). The torsion box (2.1) is delimited by a front spar (2.1.1) and a second spar (2.1.2).

In addition, these lifting surfaces (1) comprise two control surfaces, a forward control surface (3) and a rearward control surface (4). The rearward control surface (4) is arranged downstream of forward control surface (3). That is, the forward control surface (3) is arranged between the support structure (2) and the rearward control surface (4), specifically, the forward control surface (3) is located between the trailing edge (2.2) of the support structure (2) and the rearward control surface (4).

In an embodiment, the combination of the forward control surface (3) and the rearward control surface (4) can be a rudder, an elevator, a wing aileron or a wing flap.

The forward control surface (3) is rotatably attached to the support structure (2) at a pivot axis (6) so that this forward control surface (3) is able to rotate around said pivot axis (6). The pivot axis (6) is arranged at the trailing edge (2.2) through a hinge line spar (2.3) of the trailing edge (2.2) of the support structure (2).

The lifting surface (1) comprises a first spar (7) that provides structural support to the forward (3) and rearward (4) control surfaces and keeps them connected to each other.

The rearward control surface (4) comprises a tip end (4.1) at the trailing edge (4.4) opposite to the leading edge (1.1) of the lifting surface (1). Moreover, the rearward control surface (4) has an aerodynamic surface defined by a deformable skin. This deformable skin comprises an upper or extrados deformable skin (4.2) and a lower or intrados deformable skin (4.3). In addition, the deformable skin is a deformable skin made of deformable materials.

There is a first driving means (8) in charge of actuating the rotation of the forward control surface (3) and the rearward control surface (4). Both control surfaces (3, 4) rotates together around the pivot axis (6) since they are connected each other. Additionally, a deflection angle, with respect to the support structure (2) or the longitudinal direction (chordwise) (X) of the lifting surface (1), is formed as a result of the control surfaces rotations. In these figures 1 and 2, no deflection angle is shown as the control surfaces (3, 4) have not been rotated.

Furthermore, there is second driving means (9) for deforming the rearwards control surface (4) at the trailing edge (1.2), specifically deforming the deformable skin of the rearward control surface (4). This second driving means (9) is connected to the lower deformable skin (4.3) of the rearward control surface (4) through a rod (9.1) of the second driving means (9). This rod (9.1) is attached to the lower deformable skin (4.3) through a first fitting (13). When the rod (9.1) is pulled towards the leading edge (1.1) the deformable skin of the rearward control surface (4) is deformed. The deformable skin of the rearward control surface (4) has the capacity to adapt its morphology to flight controls as a result of this deformable skin being pulled by means of the linear movement of the rod (9.1).

Figure 1 specifically shows an embodiment wherein the second driving means (9) and the first driving means (8) actuate independently of each other. In other words, the deformation of the deformable skin in the rearward control surface (4) is independent from the rotation of the forward control surface (3) around the pivot axis (6). This is the reason why no link is observed between the first driving means (8) and the second driving means (9).

Figure 2 shows another embodiment wherein the actuation of the second driving means (9) depends on the actuation of the first driving means (8) so that the second driving means (9) is mechanically linked with the rotation of the forward control surface (3) around the pivot axis (6). That is, there is a mechanical link between the second driving means (9) and the support structure (2). This mechanical link corresponds to a bar (11) that is fixed on one of its ends to the support structure (2) and rotatably attached on its opposite end to the rod (9.1).

According to the embodiment of figure 2, the rotational movement of the forward control surface (3) together with the rearward control surface (4) around the pivot axis (6) causing the bar (11) to rotate with respect to the support structure (2) and the rod (9.1) moving through the guiding means (5) with a linear motion.

The mechanical link proposed uses a bearing joint (in the connection between the bar (11) and the rod (9.1)) or a connection rod foot configured to translate rotation movement between bars to a piston linear movement.

For any of the embodiments shown in figures 1 and 2 respectively, it is further shown guiding means (5) comprising a first spar (7) and an additional spar (not shown) for guiding the rod (9.1) of the second driving means (9) in a linear movement inside the lifting surface (1), that is, passing through both first (7) and additional spar. In particular, the additional spar is arranged on the rearward control surface (4) between the upper deformable skin (4.2) and lower deformable skin (4.3). In addition, the linear movement of the rod (9.1) is perpendicular to the tip end (4.1) at the trailing edge (4.4) of the rearward control surface (4). Moreover, the linear movement of the rod (9.1) is also parallel to the longitudinal direction (X).

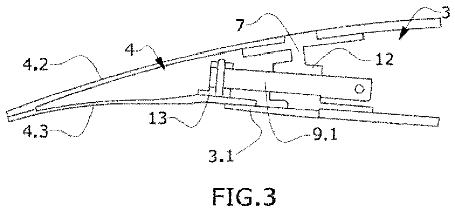

Figure 3 show a portion of an aircraft lifting surface (1) according to an embodiment, specifically the trailing edge of a forward control surface (3) and a rearward control surface (4). This figure shows a rearward control surface (4) as the ones described for figures 1 and 2. In this embodiment the guiding means (5) comprises an enclosing structure (12) that passes through the first spar (7). This enclosing structure (12) defines a straight channel for the linear movement of the rod (9.1). The rod (9.1) is attached to the lower deformable skin (4.3) through a first fitting (13).

Figure 3 specifically shows an upper skin continuation between the forward control surface (3) and the rearward control surface (4), regarding to the extrados of the lifting surface (1). In addition, for the intrados of the lifting surface (1), the lower skin of the forward control surface (3) has a portion (3.1) that extends beyond the first spar (7) towards the tip end (4.1) of the rearward control surface (4); and the lower deformable skin (4.3) of the rearward control surface (4) arises at the tip end (4.1) and extends overlapping the portion (3.1) of the lower skin of the forward control surface (3). The overlapping of the lower deformable skin (4.3) over the portion (3.1) leaves a free space between the resting lower deformable skin (4.3) and the first spar (7) so that when the deformable skin deforms this lower deformable skin (4.3) can slide on the portion (3.1) within the lifting surface (1).

In another embodiment not shown in figures, the lower deformable skin (4.3) slides against the portion (3.1) of the lower skin of the forward control surface (3).

The sliding of the lower deformable skin (4.3) according to any one of the preceding embodiments, occurs as a consequence of the operation of the second driving means (9).

In an embodiment (not shown) the lifting surface (1) comprises two rearward control surfaces (4), one followed by the other in spanwise direction. In addition, according to this embodiment there is a second driving means (9) for each rearward control surfaces (4) of the lifting surface (1).

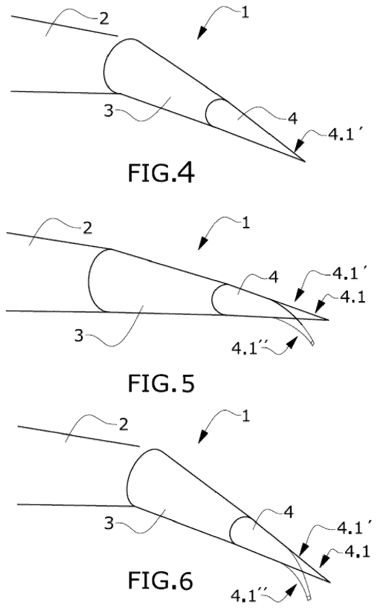

Figures 4 to 6 show an aircraft lifting surface (1) in different positions. These figures show a schematic representation of a support structure (2), a forward control surface (3) and a rearward control surface (4).

Figure 4 shows the forward control surface (3) rotated around the pivot axis (not shown) with respect to the support structure (2) according to a first direction, i.e. downwards. Since the forward control surface (3) is connected or attached to the rearward control surface (4), when the forward control surface (3) rotates the rearward control surface (4) also rotates in the same first direction. Thus, both control surfaces (3, 4) are represented rotated relative to the support structure (2) in this figure 4. The mentioned rotations is achieved by means of first driving means (not shown) as the ones described above for the other figures.

Figure 5 shows the tip end (4.1) of the rearward control surface (4) deformed (4.1") compared to the position where it is not deformed (4.1'). This deformation in the deformable skin of the rearward control surface (4) is provided by the second driving means as described above for figure 1. As it can be observed in this figure 5, the rearward control surface (4) can be actuated independently of the forward control surface (3) which is shown in a non-rotating position. In addition, this figure 5 shows the tip end (4.1") deformed in a second direction, i.e. downwards.

Figure 6 shows the forward control surface (3) rotated around the pivot axis (6) with respect to the support structure (2) together with the rearward control surface (4). In addition, this figure also shows the rearward control surfaces (4) deformed (4.1") at its tip end (4.1) compared to the position of not-deformed position (4.1'). The embodiment shown in this figure 6 corresponds to the ones described above for figure 2, i.e. when the actuation of the first driving means (not shown) causes the actuation of the second driving means (not shown). This figure 6 shows both the forward control surface (3) together with the rearward control surface (4) and the tip end (4.1") of the rearward control surface (4) respectively rotated and deformed downwards relative to the support structure (2).

In an embodiment (not shown), the rotation direction of the forward control surface (3) together with the rearward control surface (4) can be different or opposite to the deformation direction of the deformable skin of the rearward control surface (4). In particular, the forward control surface (3) may be rotated downwards as in figure 6, but the deformable portion of the rearward control surface (4) may be deformed upwards with respect to the forward control surface (3).

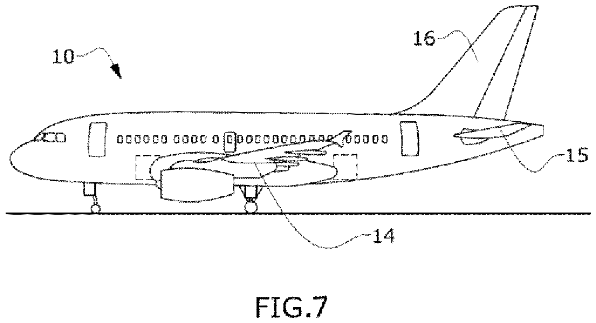

Figure 7 shows an embodiment of an aircraft (10) comprising an aircraft lifting surface (1) according to an embodiment of the invention. Different embodiments of lifting surfaces are comprised in the aircraft (10), such as a wing (14), a horizontal stabilizer (15) and a vertical stabilizer (16).

## Claims

1. Aircraft lifting surface (1) comprising:
- a support structure (2),
- a forward control surface (3) arranged downstream of the support structure (2), and
- a rearward control surface (4) being arranged downstream of the forward control surface (3);
wherein
the forward control surface (3) is rotatably attached to the support structure (2) along a pivot axis (6),
the rearward control surface (4) is rigidly connected to the forward control surface (3),
the rearward control surface (4) comprises an aerodynamic surface defined by a deformable skin comprising an upper deformable skin (4.2) and a lower deformable skin (4.3), and
the aircraft lifting surface (1) further comprising:
- first driving means (8) configured to rotate the forward control surface (3) together with the rearward control forming a deflection angle with respect to the support structure (2); and
- second driving means (9) connected to the deformable skin of the rearward control surface (4) and being configured to deform the deformable skin of the rearward control surface (4).

2. The aircraft lifting surface (1) according to the previous claim, wherein the actuation of the second driving means (9) is independent from the rotation around the pivot axis (6) of the forward control surface (3).

3. The aircraft lifting surface (1) according to any one of the previous claims, wherein the second driving means (9) comprises a rod (9.1) and guiding means (5) for guiding the rod (9.1), the rod (9.1) being attached to the rearward control surface (4) so as to be configured to deform the upper deformable skin(4.2) or the lower deformable skin (4.3), and wherein the second driving means (9) further comprises an actuator (9.2) connected to the rod (9.1) and configured to make the rod (9.1) move according to a linear movement guided by the guiding means (5).

4. The aircraft lifting surface (1) according to claim 1, wherein the second driving means (9) is mechanically linked with the support structure (2), so that the rotational movement of the forward control surface (3) together with the rearward control surface (4) around the pivot axis (6) causes the actuation of the second driving means (9).

5. The aircraft lifting surface (1) according to the previous claim, wherein:
the second driving means (9) comprises a rod (9.1) and guiding means (5) for guiding the rod (9.1), the rod (9.1) being attached to the rearward control surface (4) so as to be configured to deform the upper deformable skin (4.2) or the lower deformable skin (4.3), and
the mechanical link between the second driving means (9) and the support structure (2) comprises a bar (11) fixedly attached to the support structure (2) and connected to the rod (9.1) through a kinematic joint adapted to allow the rotation of the bar (11) relative to the rod (9.1),
so that the rotational movement of the forward control surface (3) together with the rearward control surface (4) around the pivot axis (6) causes the bar (11) to rotate at the kinematic joint and a linear movement of the rod (9.1) through the guiding means (5).

6. The aircraft lifting surface (1) according to any one of claims 3 or 5, wherein the guiding means (5) comprises a first spar (7) arranged connecting the forward control surface (3) with the rearward control surface (4) and an additional spar arranged on the rearward control surface (4) between the upper deformable skin (4.2) and the lower deformable skin (4.3), and wherein the rod (9.1) passes through the first spar (7) and the additional spar.

7. The aircraft lifting surface (1) according to any one of claims 3 to 6, wherein the guiding means (5) comprises an enclosing structure (12) passing through the first spar (7) and defining a straight channel through which the rod (9.1) is adapted to move linearly.

8. The aircraft lifting surface (1) according to any one of claims 6 or 7, wherein the guiding means (5) is provided such that the linear movement of the rod (9.1) is perpendicular to a tip end (4.1) at a trailing edge (4.4) of the rearward control surface (4).

9. The aircraft lifting surface (1) according to any one of claims 3, 5, 6, 7 or 8, wherein the rod (9.1) is attached to the upper deformable skin (4.2) and/or the lower deformable skin (4.3) through a first fitting (13).

10. The aircraft lifting surface (1) according to any one of the previous claims, wherein the aircraft lifting surface (1) comprises a plurality of second driving means (9) distributed along the rearward control surface (4).

11. The aircraft lifting surface (1) according to any one of the previous claims, wherein the aircraft lifting surface (1) comprises an upper skin that is continuous between the forward control surface (3) and the rearward control surface (4).

12. The aircraft lifting surface (1) according to any one of the previous claims, wherein the lower deformable skin (4.3) of the rearward control surface (4) is configured to slide against a lower skin of the forward control surface (3) or to slide within the aircraft lifting surface (1).

13. The aircraft lifting surface (1) according to any one of the previous claims, wherein:
the first driving means (8) is configured to rotate the forward control surface (3) together with the rearward control surface (4) around the pivot axis (6) according to a first direction;
the second driving means (9) is configured to deform the deformable skin of the rearward control surface (4) according to a second direction; and
the first direction and the second direction are the same or different.

14. The aircraft lifting surface (1) according to any one of the previous claims, wherein the combination of the forward control surface (3) and the rearward control surface (4) is a rudder, or an elevator, or a wing aileron or a wing flap.

15. Aircraft (10) comprising an aircraft lifting surface (1) according to any one of the previous claims.
